(19) Europäisches Patentamt

European Patent Office

Office européen des brevets

(11) **EP 2 796 309 A1**

(12) **EUROPEAN PATENT APPLICATION**
published in accordance with Art. 153(4) EPC

(43) Date of publication:
**29.10.2014 Bulletin 2014/44**

(51) Int Cl.:
***B60J 1/16*** (2006.01)

(21) Application number: **12858908.2**

(22) Date of filing: **19.01.2012**

(86) International application number:
**PCT/CN2012/000100**

(87) International publication number:
**WO 2013/091267 (27.06.2013 Gazette 2013/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2011 CN 201110432701**

(71) Applicant: **Autoeasy Electronic Technology Co., Ltd**
**Beijing 100176 (CN)**

(72) Inventor: **SUN, Tengchen**
**Beijing 100176 (CN)**

(74) Representative: **Petraz, Gilberto Luigi et al**
**GLP S.r.l.**
**Viale Europa Unita, 171**
**33100 Udine (IT)**

(54) **ANTI-PINCH SENSOR OF ELECTRIC VEHICLE WINDOW AND METHOD THEREOF**

(57) A power window anti-pinch sensor, characterized in that, at least two capacitors and sensor detecting circuits are provided on the surface of the top edge of the window glass (13); the most top capacitor is the main detecting capacitor C1, and the lower capacitor is the auxiliary detecting capacitor C2. The main detecting capacitor C1 and the auxiliary detecting capacitor C2 detect whether human body approaches or contacts the top edge of the window glass (13), and the signals of capacitance change generated from the human body approaching are detected by the main detecting capacitor C1 and the auxiliary detecting capacitor C2; the signals are transmitted to the sensor detecting circuits, which generate control signals controlling actions of the lifting motor of the power window based on the detected signals of change from the main detecting capacitor and the auxiliary detecting capacitor. The structure of the sensor is simple, and it is able.to achieve the anti-pinch function with zero pinching force which cannot be achieved by the existing anti-pinch sensor, which detects the current going through the lifting motor or the lifting position of the window glass (13).

Fig. 8

Printed by Jouve, 75001 PARIS (FR)

EP 2 796 309 A1

## Description

## Technical Field

The present invention involves an anti-pinch sensor used for power windows in automobiles, and involves the power window anti-pinch method.

## Background Art

At present, most automobiles in the world are equipped with power window; however, while rising up the power window, it may pinch human limbs and hurt people, especially children. Therefore, laws and regulations have been issued both in America and Europe, requiring automobile manufacturers to add anti-pinch devices to power windows, and requiring the pinch force while rising power window shall not be greater than 100 Newton. When the force exceeds 100 Newton, the anti-pinch device must force the power window to move backward to a place safe for human body.

So far, midsize and luxury automobiles in the world have equipped with anti-pinch devices, but the existing anti-pinch devices have several flaws, and they are unable to fundamentally stop power window from damaging human body. The existing power window anti-pinch sensors can be classified into 4 categories:

Category I: Sensing by indirectly measuring the pressure

At present, almost all the power window anti-pinch products in the automobile pre-assembling market adopt the sensing art by using resistor or Hall element to measure the current through the lifting motor, so that it indirectly measures the pressure. Such art adopts the principle when facing obstacles during the power window rising process, the pressure increases, and causing the motor current increase; thus, such art achieves the anti-pinch purpose by measuring the motor current change and indirectly calculating the pressure change. Since the frictional resistance caused by the rubber sealing strip to the window during the window rising process is related with the rising position of the window, the current power window anti-pinch products usually use additional Hall or photoelectric position sensors to determine the position of window; thus assisting to calculate the normal pressure value in the window rising/lowering process. The above mentioned anti-pinch sensing art has the following flaws:

1. While testing the products, the testing vehicles can be calibrated meticulously to meet the anti-pinch force requirement of 100 N. However, during mass production, it is difficult to guarantee the conformance of the anti-pinch force with regulation requirements due to the inconsistency of motor parameters, friction force of the rubber sealing strip, production of window frames and lifting mechanism.

2. After the products being delivered, two categories of misjudgment faults can easily happen to the anti-pinch system; (1) If the normal friction force or pressure reduces, when the pinch force reaches or exceeds 100N after the encountered obstacles, the anti-pinch device may still consider the pinch force has not reached 100N and will not perform the reverse action, which causing damage to the human bodies; and (2) when there is no obstacles, but the normal friction force or pressure has increased over 100N required by the laws and regulations, the anti-pinch device may perform the wrong operation, and the window cannot rise normally. These two faults are due to change in normal friction force or pressure, which can be changed by various factors, including, the hardness of the rubber sealing strip changing due to environmental temperature changes, aging and deformation of rubber sealing strip, wearing and deformation of lifting mechanism, deformation of window frames, etc.

Other than the art which indirectly measures the pressure by measuring the current changes, in recent years, some people also suggest that optical fibers can be installed inside the sealing rubber strip of the window frames. When the rubber strip deforms due to the squeezing, the optical fibers will also deform. The magnitude of the pinch force can be calculated by measuring the changes in the graph, which is formed by the laser beams through the optical fibers. However, such art is still affected by the aging and deformation of the rubber strip or the hardness of rubber due to temperature changes, and those flaws mentioned above still exist.

Category II: Sensing by directly measuring the pressure

Pressure sensors are placed in the rubber sealing strip of the window frame or at the bottom of the glass; and the sensor directly measures the pressure. Due to the aging of the rubber sealing strip or temperature change caused the change in hardness and friction force of sealing strip, such sensors also have the same flaws as the indirectly measuring the pressure sensor. Furthermore, the installation of the pressure sensor is complex and comes with higher cost. Therefore, such sensor has not been used in the automobile pre-installation market.

Category III: Photoelectric type obstacle detecting Sensor

Using infrared light to form an infrared light curtain within the scope the window frame. When the obstacles cover the infrared light curtain, the infrared light received will change, thus achieving a non-contact anti-pinch mechanism. One of the flaws is that the infrared light can be easily affected by the heavy weather, such as rain, frog, dust, etc. Furthermore, several pairs of infrared transmitting and receiving devices are required to form the infrared light curtain. The installation is difficult and the cost is high. Therefore, although there are standards for the infrared light sensors in European and United States, even till now, such art has not been applied in the automobile pre-installation market.

Category IV: Capacitance human body proximity detecting sensor

The basic principle of the capacitance human body proximity detecting sensor is that the dielectric constants changes as the human body gets closer to the capacitor's electrode, and the capacitance is directly proportional to the dielectric constant. Therefore, the degree of proximity of the human body can be perceived based on the change of capacitance.

The existing capacitance anti-pinch sensors can be classified into two categories according to the position of the capacitor's electrode:

1. Installing the detecting capacitor's electrode in the upper sealing area of the window

Such as the Patents US6337549, US6377009, US7293467, US20030005775, US6483054, US6389752, US7319301 and CN200880114004.5

This art uses a metal electrode embedded in the upper sealing strip of the glass window to detect the changes of capacitance. When a conductor approaches towards the electrode, the dielectric constant changes also cause capacitance between the electrodes changes, and thus achieve a non-contact anti-pinch device. Patent US6337549 increases the elasticity by forming hollow areas inside the sealing strip or filling the hollow areas with sponge material. When a non-conductive object enters the anti-pinch area, the rising window will pinch the non-conductive object, and the pinch force causes the sealing strip to deform, and the displacement of the detection electrode inside the sealing strip causes the capacitance change and achieves an anti-pinch device with limited force. Patent US6377009 adopts the narrow electric pulse to charge and discharge the capacitor in order to reduce the disturbance of external factors like the moisture; and at the same time, Patent US6377009 uses an adaptive algorithm along with proximity sensors and motor current detecting circuit to adjust the system offset, which is caused by subtle changes, such as material aging or deformation.

2. Installing a capacitor detecting electrode on the upside of the window glass

This method utilizes a detection electrode screen printed on the top side of the glass to detect conductive objects (such as US4453112,), meanwhile, the electrode works with a position detecting circuit to record the position - capacitance curve in the normal state. When the capacitance value at certain position exceeds the certain value, the controller controls the window motor to roll down the window.

The above-mentioned capacitance anti-pinch method has the following disadvantages:

(1) An open-ended detection electrode cannot detect the orientation of the object. The electric field lines are in the surrounding area of the detection electrode, there may be misjudgment in the detection system when conductors, such as the head of a passenger, or his/her hand placed on the handrail approaches to the side of the electrode.

(2) The electrode installed inside the sealing strip will deform due to the stress caused by rubber aging, temperature change, improper assembling, door deformation etc. Thus causing disturbance in the signal.

(3) External temperature and humidity change will change the dielectric constant and cause disturbance in the detection circuits.

(4) Although detection circuits with the shielding layers (similar to the coaxial cables) are not affected by the external environment, they cannot achieve non-contact anti-pinch. Such device also has the flaws described in the article (2).

Therefore, these various capacitance anti-pinch method and devises have not been adopted by the automobile pre-installation market.

**Contents of the Invention**

An object of the present invention is to overcome the deficiency of the existing arts, and provide a power window anti-pinch sensor which achieves the anti-pinch with zero pinch force, strong anti-interference performance, and accurate detection.

Another object of the present invention is to overcome the deficiency of the existing arts, and provide a power window anti-pinch method which achieves the anti-pinch with zero pinch force and strong anti-interference performance.

A power window anti-pinch sensor, comprising at least two capacitors provided along the top surface of a window glass and a sensor detecting circuit; wherein, the most top capacitor is a main detecting capacitor C1, and the lower capacitor is an auxiliary detecting capacitor C2; the main detecting capacitor C1 and auxiliary detecting capacitor C2 are sensors to detect whether human body approaches to or contacts the top of the window glass; the signals of capacitance change caused by human body approaching and detected by the main detecting capacitor C1 and the auxiliary detecting capacitor C2 are transmitted to the sensor detecting circuits; the sensor detecting circuits generate a control signal to control the actions of the lifting motor of the power window based on the detected change signals from the main detecting capacitor and the auxiliary detecting capacitor.

A power window anti-pinch sensor provided by the invention is also has the following additional features:

At least three capacitive electrode strips are provided on the same surface of the top edge of the window glass in parallel with a certain spacing distance; two adjacent capacitive electrodes respectively form the main detecting capacitor C1 and auxiliary detecting capacitor C2.

At least two pairs of capacitive electrodes strips are set up at symmetrical positions of inner surface and outer surface above the window glass according to certain spaces, among which, one pair of the capacitive electrodes located on the topmost surface constitute the main detecting capacitor C1, and other capacitive electrodes located on the lower surface constitute the auxiliary detecting capacitor C2.

A common electrode is provided on the surface of the top edge of the window glass, and two electrodes are provided on another surface with an upper and lower distribution; the upper electrode on the other surface and the common electrode form the main detecting capacitor C1; the lower electrode on the other surface and the common electrode form the auxiliary detecting capacitor C2.

The distance from the main detecting capacitor C1 to the top edge of the window glass is 0 to 5 mm, the space between the main detecting capacitor C1 and auxiliary detecting capacitor C2 is 2 to 10 mm, and the width of the electrodes is 1 to 8 mm.

The sensor detecting circuits include an exciting signal generator, at least two analog filtering circuits, an analog-to-digital conversion circuit and a microcontroller; the exciting signal generator is respectively connected with one of the electrodes in the main detecting capacitor and one of the electrodes in the auxiliary detecting capacitor, the other electrode in the main detecting capacitor and the auxiliary detecting capacitor is respectively connected with the analog filtering circuits, the change signals detected by the main detecting capacitor and auxiliary detecting capacitor are converted into digital signals through the analog-to-digital conversion circuit, and the microcontroller generates control signals controlling the lifting motor of the power window through a software algorithm based on the received digital signals.

Each analog filtering circuit includes at least one filtering capacitor connected in series with the main detecting capacitor or with the auxiliary detecting capacitor.

Each analog filtering circuit includes at least one filtering capacitor connected in parallel with ground.

At least one filtering capacitor C7 is connected to ground and in parallel with the exciting signal generator and the main detecting capacitor; and at least one filtering capacitor C8 is connected to ground and in parallel with the exciting signal generator and the auxiliary detecting capacitor.

The lead wires for electrodes located on the inner surface and outer surface of window glass are located on the left and right side of the window glass; alternatively, at least one lead wires for electrodes located on the window glass is located on one side and other lead wires are located on the other side.

The electrodes are long enough to at least cover the area where the window glass may pinch the human body.

The electrodes are covered with insulating layer.

Each electrode is formed by connecting multiple electrode plates in series; alternatively, each electrode has a bend line structure.

The electrode is glued, printed, embedded or etched on the window glass (13).

A power window anti-pinch detection method, a pair of main detecting capacitors are provided on the top edge of the window glass, and at least one pair of auxiliary detecting capacitors are provided below the main detecting capacitor; if any human body approaches the top edge of the window glass, the capacitance change of the main detecting capacitor is significantly greater than the capacitance change of the auxiliary detecting capacitor; such result is the judging condition for judging whether the human body is close to the top edge of the window glass; the sensor detecting circuit receives the signals of capacitance change detected by the main detecting capacitor and the auxiliary detecting capacitor, and generates a control signal based on the condition.

A power window anti-pinch detection method provided in the invention also has the following additional features:

When any human body approaches the main detecting capacitor and the auxiliary detecting capacitor from the side of the window glass, since the distance between the human body and the main detecting capacitor and the distance between the human body and the auxiliary detecting capacitor has little difference, the capacitance change of the main detecting capacitor and auxiliary detecting capacitor are basically equal; if any human body approaches the side of the window glass from the bottom of the auxiliary detecting capacitor, since the distance between the human body and the auxiliary detecting capacitor is smaller than the distance between the human body and the main detecting capacitor, the capacitance change of the auxiliary detecting capacitor is bigger than the capacitance change of the main detecting capacitor; such results are the judging conditions for judging whether the human body is close to the top edge of the window glass.

The capacitance change of the main detecting capacitor and the auxiliary detecting capacitor caused by temperature change or environmental factors, such as rainwater, fog, snow water and electromagnetic interference on the window glass is basically equal, such result is the judging condition for eliminating the effect from the environmental factors.

An exciting signal generator inputs an exciting signal into the main detecting capacitor and the auxiliary detecting capacitor; after experiencing the capacitance change in the main detecting capacitor and the auxiliary detecting capacitor, the exciting signal is input into the analog filtering circuit connected to the main detecting capacitor and the auxiliary detecting capacitor; each exciting signal is processed by the analog filtering circuit, then it is transmitted into the analog-to-digital conversion ; the analog-to-digital conversion circuit converts the analog signals into digital signals and transmits them into the microcontroller, which conducts a differential operation based on digital signals converted to generate a control signal.

Compared with the existing art, the power window anti-pinch sensor provided in the present invention has following advantages: the two electrode of the main detecting capacitor C1 is close to the top edge of window glass, and the two electrode of the auxiliary detecting capacitor C2 is far from the top edge of window glass. When the human body approaches or touches the top edge of glass, the capacitance change of main detecting capacitor C1 is larger than the capacitance change of the auxiliary detecting capacitor C2. On the other hand, firstly, the dielectric constant change to the glass caused by temperature change has almost equal effects on the main detecting capacitor C1 and the auxiliary detecting capacitor C2. Secondly, the rain, mist and snow landed on lateral sides of the window glass causes almost the same effect to the main detecting capacitor C1 and the auxiliary detecting capacitor C2. Therefore, the capacitance changes of main detecting capacitor C1 and the auxiliary detecting capacitor C2 caused by human body and external environmental factors, including temperature, rain, mist or snow, can be distinguished by comparing the capacitance change of the main detecting capacitor C1 and the auxiliary detecting capacitor C2. Thus, the present invention overcomes the judgment error, which is caused by temperature change, rain or mist or other severe weather change, aging and deformation of the rubber sealing strip, deformation of the window frame, and etc., existed in the existing capacitor and infrared photoelectric power window anti-pinch sensors. Similarly, when human body approaches to the top edge of window glass from the lateral side, the effects on the main detecting capacitor C1 and the auxiliary detecting capacitor C2 are almost the same. When human body approaches the lateral side of window glass from underneath the auxiliary detecting capacitor C2, the effect on the auxiliary detecting capacitor C2 is larger than the effect on the main detecting capacitor C1. Thus, the present invention can detect the direction or the area where human body approaches or touches window glass, and overcomes the judgment error caused by limited sensing area and direction in the existing capacitance anti-pinch sensors.

The method disclosed in the present invention do not need to measure the pressure, thus it achieves zero-pinch-force anti-pinch; and it prevents the possibility of power window hurting human body. The technical solution in the present invention is simple and easy to achieve, and it is suitable for wide applications.

1. Compared with the existing anti-pinch sensors which directly or indirectly measures the pressure, the anti-pinch sensor provided in the present invention has the following advantages:

(1) The anti-pinch sensor provided in the present invention is based on capacitance change caused by human body approaching, it has nothing to do with pressure. Thus, it can achieves zero-pinch-force anti-pinch and fundamentally guarantee the safety;

(2) The anti-pinch sensor provided in the present invention overcomes the inconsistency of product performance caused by inconsistent frictional force of sealing rubber strip, inconsistency manufacturing and installment of window frame and lifting machinery structure. Thus, the present invention is more suitable for mass production;

(3) The anti-pinch sensor provided in the present invention eliminates the product malfunction caused by aging and deformation of the sealing rubber strip, window frame and the lifting machinery structure. Thus the present invention is more reliable and safer to use.

(4) The anti-pinch sensor provided in the present invention has a simple structure, and the material cost is low.

2. Compared with existing anti-pinch sensors based on infrared photoelectric detecting method, the anti-pinch sensor provided in the present invention has the following advantages:

(1) The anti-pinch sensor provided in the present invention eliminates the product malfunction caused by severe weather, including rain, mist and dust. Thus, the present invention is more reliable and safer to use.

(2) The anti-pinch sensor provided in the present invention has a simple structure, and the material cost is low.

3. Compared with existing anti-pinch sensors based on capacitance detecting method, the anti-pinch sensor provided in the present invention has the following advantages:

(1) The anti-pinch sensor provided in the present invention eliminates the product malfunction caused by severe weather, including rain, mist and dust. Thus, the present invention is more reliable and safer to use.

(2) The anti-pinch sensor provided in the present invention effectively solves the problem of misoperation caused by poor selectivity of the sensitive area and direction. Thus the present invention has a better performance and higher reliability;

(3) The anti-pinch sensor provided in the present invention is easier to manufacture and suitable for mass production.

**Description of Figures**

Figure 1 illustrates the capacitance electrodes according to the present invention placed on the inner surface of a window glass.

Figure 2 illustrates of the capacitance electrodes according to the present invention placed on the outer surface of a window glass.

Figure 3 illustrates the cross-section of capacitance electrodes according to the present invention placed on the inner and outer surface of a window glass.

Figure 4 illustrates the electric field distribution of the capacitance electrodes according to the present invention placed on the inner and outer surface of a window glass without any human body approaching.

Figure 5 illustrates the electric field distribution of two pairs of the capacitance electrodes according to the present invention placed on the upper and lower side of a window glass without any human body approaching.

Figure 6 illustrates the electric field distribution of the capacitance electrodes according to the present invention placed on the outer surface of a window glass with human body approaching.

Figure 7 illustrates the circuit diagram of the present invention.

Figure 8 illustrates a preferred embodiment of the present invention.

Figure 9 illustrates another embodiment of the capacitance electrodes according to the present invention.

Figure 10 illustrates the electric field distribution of the electrodes in Figure 9.

Figure 11 illustrates the first embodiment of the shape of the capacitance electrodes according to the present invention.

Figure 12 illustrates the second embodiment of the shape of the capacitance electrodes according to the present invention.

Figure 13 illustrates the third embodiment of the shape of the capacitance electrodes according to the present invention.

Figure 14 illustrates the outer surface of the first embodiment of the direction of electrode leading wire.

Figure 15 illustrates the inner surface of the first embodiment of the direction of electrode leading wire.

Figure 16 illustrates the outer surface of the second embodiment of the direction of electrode leading wire.

Figure 17 illustrates the inner surface of the second embodiment of the direction of electrode leading wire.

Figure 18 illustrates the outer surface of the third embodiment of the direction of electrode leading wire.

Figure 19 illustrates the inner surface of the third embodiment of the direction of electrode leading wire.

Figure 20 illustrates the fourth embodiment of the capacitance electrodes according to the present invention

Figure 21 illustrates the electric field distribution of the fourth embodiment of the capacitance electrodes of the present invention.

Figure 22 illustrates the electric field distribution of the fourth embodiment of the capacitance electrodes of the present invention with human body approaching.

Figure 23 illustrates the fourth embodiment of the direction of electrode leading wire.

Figure 24 illustrates the circuit diagram of the fourth embodiment of the capacitance electrodes according to the present invention.

Figure 25 illustrates the fifth embodiment of the capacitance electrodes according to the present invention.

Detailed Description and Embodiments

The principle of detection of the present invention is as follows:

The basic principle of capacitor is: if fringe effect of capacitance is not concerned, the capacitance of a uniform dielectric capacitor is

$$C = \varepsilon \cdot S/d$$

where, $\varepsilon$ refers to the dielectric constant between two electrodes, $\varepsilon = \varepsilon_0 * \varepsilon_r$. $\varepsilon_0$ is the dielectric constant in vacuum. $\varepsilon_r = 8.854 * 10^{-12}$F/m, $\varepsilon_r$ is the dielectric constant of a medium relative to vacuum. The relative dielectric constant of air $\varepsilon_r \approx 1$; and other medium's dielectric constant $\varepsilon_r > 1$; S refers to the area of the electrodes; d refers to the space between two electrodes.

As the change detected causes the change of relevant parameters $\varepsilon$, S, d of the capacitance sensor, the capacitance C will change correspondingly.

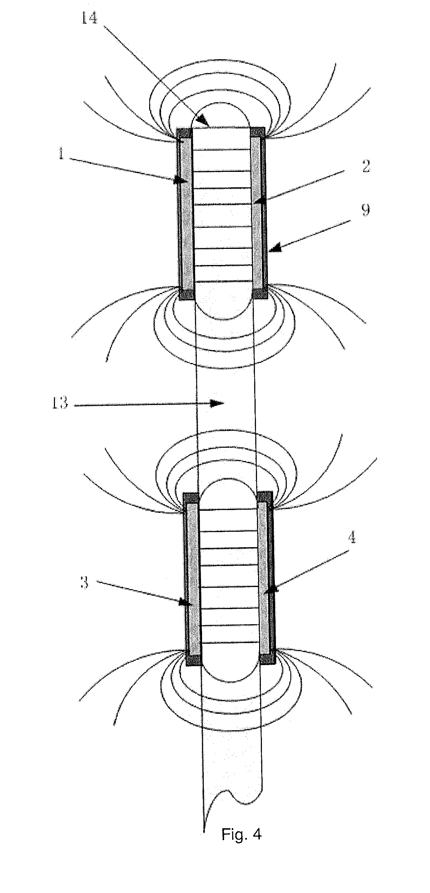

The principle of detection of the present invention is shown in Figure 4, where electrode 1 and electrode 2 constitute the main detecting capacitor C1 and electrode 3 and electrode 4 constitute the auxiliary detecting capacitor C2. By observing the electric field line distribution, a person skilled in art can see that the medium between the main detecting capacitor C1 and the auxiliary detecting capacitor C2 constitutes two parts: one is the glass between two capacitance electrodes; the other is the air near two capacitance electrodes. Therefore, the dielectric constant between the main detecting capacitor C1 and the auxiliary detecting capacitor C2 is the average dielectric constant of two dielectrics above. The dielectric constant of air is approximately 1; the dielectric constant of glass is approximately 4; and the dielectric constant of water is approximately 80. Since the water content in a human body is around 70%, the dielectric constant of a human body is approximately 60. If a part of human body approaches to the direction of upper edge 14 of window glass, the average dielectric constant between the main detecting capacitor C1 and the auxiliary detecting capacitor C2 will increase remarkably. However, since the human body is closer to the main detecting capacitor C1; and further away from the auxiliary detecting capacitor C2, the capacitance change in the main detecting capacitor C1 is remarkably larger than the change in the auxiliary detecting capacitor C2. If a part of human body approaches to the main detecting capacitor C1 and the auxiliary detecting capacitor C2 from lateral side 13 of the window glass; since the distance between the human body and the main detecting capacitor C1 has little difference with the distance between the human body and the auxiliary detecting capacitor C2, the capacitance change in the main detecting capacitor C1 almost equals to the capacitance change in the auxiliary detecting capacitor C2. If a part of human body approaches to the lateral side 13 of the window glass from the direction underneath the auxiliary detecting capacitor C2; since the human body is closer to the auxiliary detecting capacitor C2; and further away from the main detecting capacitor C1, the capacitance change in the auxiliary detecting capacitor C2 is remarkably larger than the capacitance change in the main detecting capacitor C1. Based on the discussion above, it can be concluded that the scale of capacitance changes in the main detecting capacitor C1 and the auxiliary detecting capacitor C2 can judge whether any part of human body is approaching to the area adjacent to the top edge 14 of window glass, and at the same time accurately detecting the direction of human body's approaching.

In addition, the capacitance change in the main detecting capacitor C1 and the auxiliary detecting capacitor C2 caused by temperature change or rainwater, fog ,snow water attached on window glass, or other environment factors is basically the same. Therefore, the impacts due to environmental changes can be eliminated.

After describing the principle of the present invention, descriptions will be made on the structure of the automobile's power window anti-pinch sensor along with the principle.

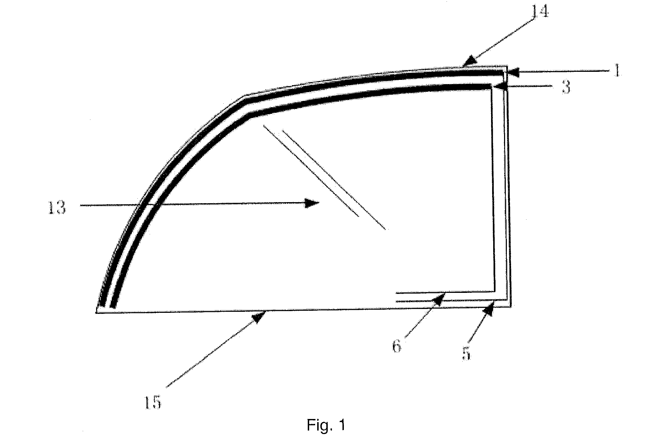

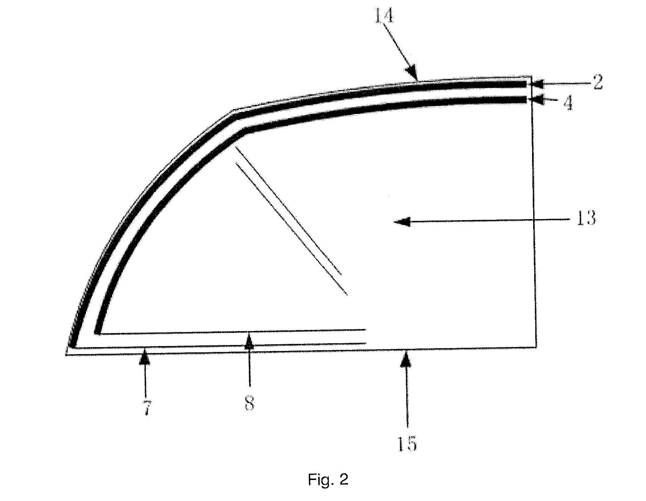

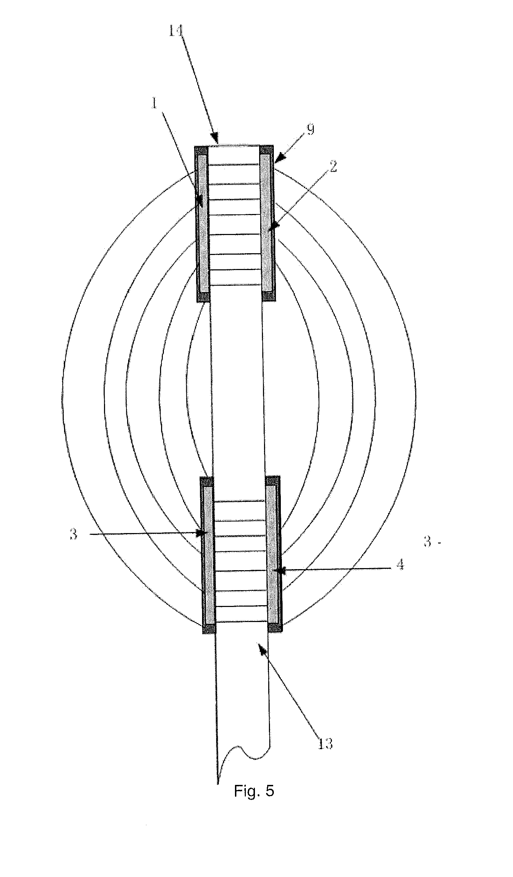

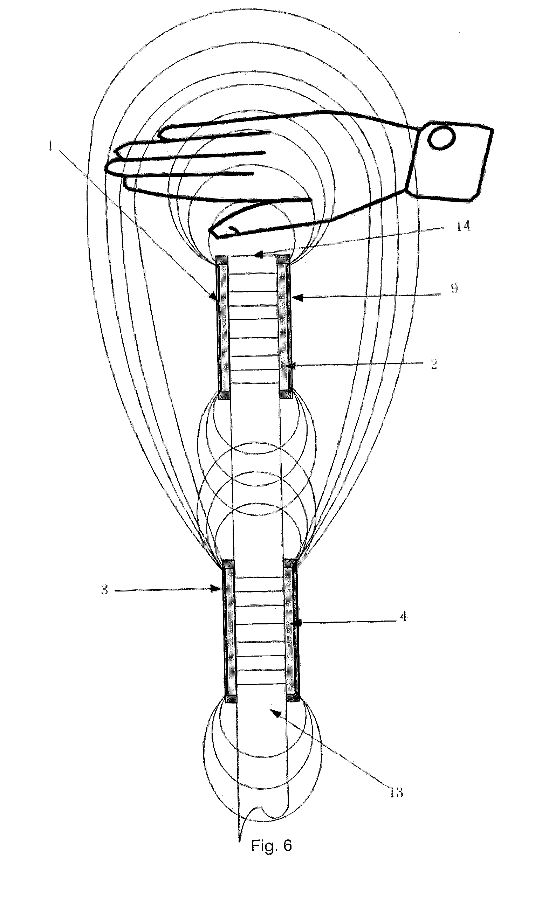

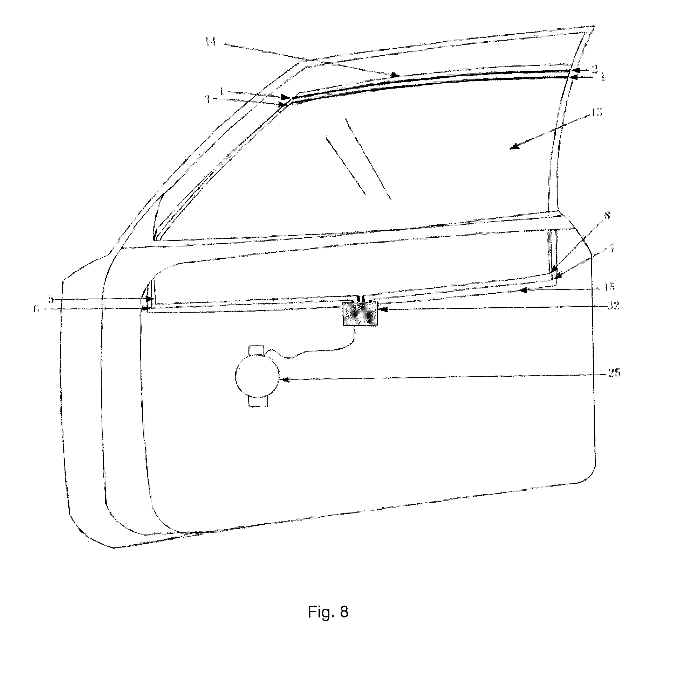

With reference to Figure 1 to Figure 11, a power window anti-pinch sensor according to the invention, comprises two pairs of capacitor electrodes strip 1, 2, 3, 4, which are placed symmetrically and parallel with a certain spacing distance on the inner and outer surface of the upper edge of the window glass, and a detecting circuits for the sensors. The pair of electrodes 1, 2 placed on the top and at the inner and outer side constitutes the main detecting capacitor C1, and the pair of electrodes 3, 4 placed below and at the inner and outer side constitutes the auxiliary detecting capacitor C2. The main detecting capacitor C1 and the auxiliary detecting capacitor C2 acts as sensors to detect if limbs of a human body approach to the upper edge 14 of the window glass. The capacitance change signal of the main detecting capacitor and the auxiliary detecting capacitor due to human body approaching is transmitted to the sensor detecting circuits. The sensor detecting circuits generates the control signals to the power window lifting motor based on the detected signals from the main detecting capacitor and the auxiliary detecting capacitor. In the present invention, multiple pairs of electrodes can be placed; for example, three or four pairs. However, the pair of electrodes on the top always acts as the main detecting capacitor and others constitute the auxiliary detecting capacitors. In the present invention, the main detecting capacitor refers to the capacitor which is most sensitive to the top of the window glass 13. The auxiliary detecting capacitors are provided mainly for eliminating the interferences or detecting the directions; namely the control signals are obtained by the differential calculation between the main detecting capacitor and the auxiliary detecting capacitor. When the signal change on the main detecting capacitor C1 and the auxiliary detecting capacitor C2 indicates that the limbs of a human body is approaching towards the upper edge 14 of the window glass, the motor can be stopped or controlled to operate reversely to achieve zero anti-pinch force without measuring the pressure. In the present invention, the upper edge of the window glass refers to edge of the window glass exposed to environment, which can also be called as the edge on the moving direction of the glass, i.e., the part possibly leads to a finger trap. The window glass of the door refers to the top side of the glass; the upper edge of the skylight glass refers to the front edge of the glass, which may possibly leads to a finger trap.

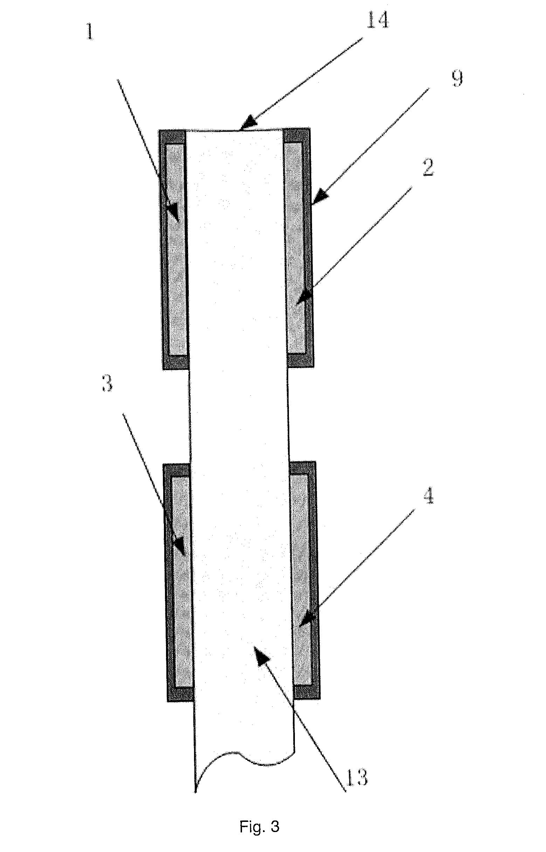

With reference to Figure 3, in one embodiment of the invention, the distance between the main detecting capacitor C1 and the window glass top edge 13 is between 0-5 mm; the preferred value range is between 0-2 mm, and the specific values can be selected as 1 mm, 2 mm, 3 mm, etc. The distance between the main detecting capacitor C1 and the auxiliary detecting capacitor C2 is between 2 mm-10 mm; the preferred value range is between 2 mm-4 mm and specific values can be selected as 2 mm, 3 mm, 4 mm, 5 mm, 7 mm, 9 mm, etc. The width of the electrode is between 1 mm-8 mm, the preferred value range is between 1 mm-3 mm, and the specific values can be selected as 1 mm, 2 mm, 3 mm, 5 mm, 7 mm, etc. The dimension ranges mentioned above meets the requirement of the present invention. If the distance between the main detecting capacitor C1 and the top edge of window glass is too large, the precision of detection are affected. However, if the distance between the main detecting capacitor C1 and the auxiliary detecting capacitor C2 is too large, their synchronous detection on interferences are affected, thus affecting its precision of detection. The width of the electrodes forms a better and more uniform electric field distribution, and meets the measurement requirement of the present invention. The length of the electrodes ensures all the possible positions for personal injuries caused by the window glass 13 are covered, thus preventing any blind angle or spots on the window glass. This range generally refers to the forward moving end of the window glass. The electrode is covered with insulating layer 9; and the insulating layer 9 acts as a protecting layer; it also further eliminates interferences and prevents electrodes from wearing out.

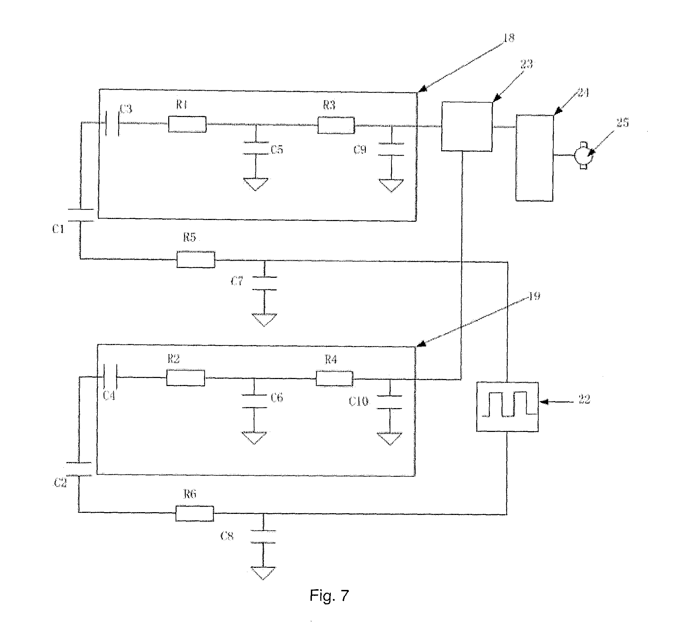

With reference to Figure 7, in the embodiment of the present invention, the sensor detecting circuits includes an excitation signal generator 22, two analog filtering circuits 18, 19, an analog-to-digital conversion circuit 23 and a microcontroller 24. The excitation signal generator 22 is respectively connected with one electrode 1, 3 of the main detecting capacitor C1 and the auxiliary detecting capacitor C2; another electrode 2, 4 of the main detecting capacitor C1 and the auxiliary detecting capacitor C2 is respectively connected with the analog filtering circuits 18, 19. The analog-to-digital conversion circuit 23 converts the changing signals from the main detecting capacitor and the auxiliary detecting capacitor into digital signals. The microcontroller 24 applies software algorithm to the received digital signal and generates the control signals to the power window lifting motor 25. The number of analog filtering circuit provided in the present invention is equal to the number of main detecting capacitor and auxiliary detecting capacitor, i.e., each detecting capacitor is provided with an analog filtering circuit. The analog-to-digital conversion circuit 23 is a multi-channel analog-to-digital conversion circuit; its channel matches with the number of the analog filtering circuits, i.e., each analog filtering circuit is connected with a channel of the analog-to-digital conversion circuit analog filtering circuit. The excitation signal generator 22 in the present invention is able to generate excitation signals; the signal can be sine wave, square wave, etc. The analog filtering circuits 18 and 19 pre-processes the analog signals, and make them available for analog-to-digital conversion. The analog-to-digital conversion circuit 23 converts analog signals into digital signals. The microcontroller 24 processes the digital signals, and generates control signals. The control signals can either drive the power window motor directly, or it can be transmitted to the onboard computer, and the onboard computer controls the power window motor. The excitation signal generator 22, analog-to-digital conversion circuit 23 and microcontroller 24 are well known in the art, thus its schematic diagram is not discussed in the present invention. The compositions of the analog filtering circuits 18, 19 are as shown in Figure; certainly, the circuits can be modified according to actual conditions and requirements. The analog filtering circuits are mainly for pre-processing analog signals to make them available for analog-to-digital conversion.

With reference to Figure 7, in the embodiment of the present invention, each analog filtering circuits 18, 19 contains at least one filtering capacitors C3 and C4 connected in series with the main detecting capacitor C1 or the auxiliary detecting capacitor C2., In the analog filtering circuit 18, which is connected with the main detecting capacitor C1, is connected with a filtering capacitor C3 in series; and the analog filtering circuit 19, which is connected with the auxiliary detecting capacitor C2, is connected with a filtering capacitor C4 in series. The purpose is for suppress low frequency interference signals and slow signal changes due to temperature changes.

With reference to Figure 7, in the embodiment of the present invention, each analog filtering circuits 18, 19 contains at least one filtering capacitor C5 and C6 connecting to ground in parallel. The purpose is to bypass the high frequency interference signal.

With reference to Figure 7, in the embodiment of the present invention, at least one filtering capacitor C7 is connected in parallel to the ground between the excitation signal generator and the main detecting capacitor; and at least one filtering capacitor C8 is connected in parallel to the ground between the excitation signal generator and the auxiliary detecting. The purpose is to bypass the high frequency interference signal in the excitation signal.

As shown in Figure 1, Figure 2 and Figure 3, electrode strips 1, 2 are symmetrically provided close to upper edge, and on the inner and outer surface of the window glass. The electrode strips 1 and 2 have the same width, and cover all the possible positions which may cause person injuries on the upper edge 14 of the window glass 13. Electrodes 1 and 2 forms the main detecting capacitor C1; electrode 1 is connected by wire 5, which is provided on the inner surface of the glass, and the wire 5 goes from the right side to the lower edge 15 of the glass. Electrode 2 is connected by wire 6, and the wire 6 goes from the left side to the lower edge 15 of the glass. The electrode strips 3 and 4 are symmetrically provided on the inner and outer surface of the window glass, at a position 3mm lower than electrode strips 1 and 2. Electrode strips 3 and 4 have the same width; and electrodes 3, 4 are parallel to electrodes 1, 2. Electrodes 3 and 4 forms the auxiliary detecting capacitor C2; electrode 3 is connected by wire 7, which is provided on the inner surface of the glass, and the wire 7 goes from the right side to the lower edge 15 of the glass. Electrode 4 is connected by wire 8, and the wire 8 goes from the left side to the lower edge 15 of the glass.

The principle of measurement of the present invention is shown in Figure 7, a square wave excitation signal (the excitation signal can be square wave or sine wave) generated by the excitation signal generator 22 is applied to the main detecting capacitor C1 and the auxiliary detecting capacitor C2. The output signals from the other end of the main detecting capacitor C1 and the auxiliary detecting capacitor C2 are filtered by the analog filtering circuits 18, 19; after that, the filtered signals are converted into digital signals through two analog-digital conversion circuits 23. Two converted digital signals simultaneously enter into the microcontroller 24; the microcontroller 24 generates a control signal to control the lifting motor 25, by conducting anti-pinch software algorithm with digital signals received from C1 and auxiliary detecting capacitor C2, thus controls the movement of the window glass 13.

The basic control strategy of the anti-pinch software algorithm is as follows, firstly, once received the signal to rise the glass window, firstly check if a part of human body is close to or contacting the upper edge 14 of the window glass; if yes, the algorithm stops the motor from starting. Secondly, during the window glass 13 raising process, if the algorithm detects a part of human body is close to or contacting the upper edge 14, then the algorithm immediately reverses the motor; thus lowers the glass down to the bottom. The above control strategy algorithm achieves zero pinch force anti-pinch.

Hereinafter, with reference to the figures,, it describes the preferred embodiment of the zero pinch force anti-pinch sensor which is manufactured according to the method specified in the present invention:

Applying silver paste screen printing to the inner and outer surface of the window glass 13 to form electrodes 1, 2, 3, 4 and wires 5, 6, 7, 8, thus forming the main detecting capacitor C1 and the auxiliary detecting capacitor C2. The width of electrodes 1, 2, 3, 4 are 2 mm; the width of wires 5, 6, 7, 8 are 1 mm; the spacing distance between electrodes 1, 2 and electrode 3, 4 is 3 mm, and the distance between electrodes 1, 2 and the upper edge of the window is 0.5 mm. In addition, an insulating layer 9 made by ink is printed by the screen printing process on top of electrodes 1, 2, 3, 4 and wires 5, 6, 7, 8. The purpose of screen printing the ink is to prevent short circuit between electrodes due to rainwater. After the screen printing process, the high temperature baking process is applied to integrate the electrodes into the window glass 13 surface, thus improves the adhesion force and friction resistance of the electrode and the insulating layer. The sensor detecting circuits 32, which are installed around the lower edge 15 of the window glass 13, are connected to the window lifting motor through elastic wires 33; so that the signals from the detecting circuits are transferred to the window lifting motor sensor detecting circuits.

Tests show that, the anti-pinch sensor in the above embodiment can achieve zero pinch force anti-pinch function and has very high reliability.

The electrodes 1, 2, 3, 4 and wires 5, 6, 7, 8 can also be installed by gluing, etching, inlaying, printing or other processes. The electrode material can be made of any conducting material.

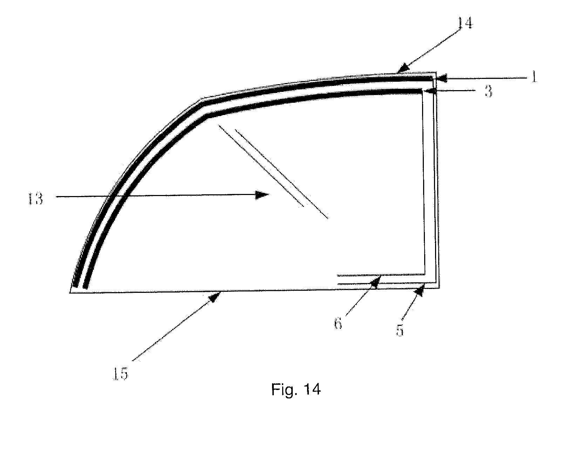

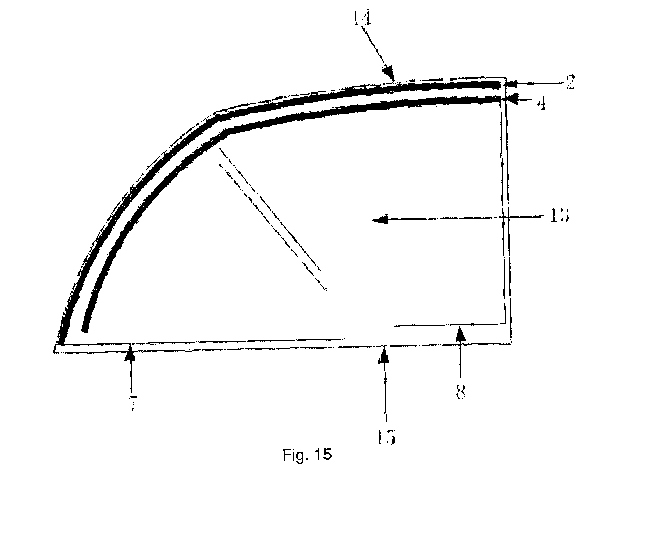

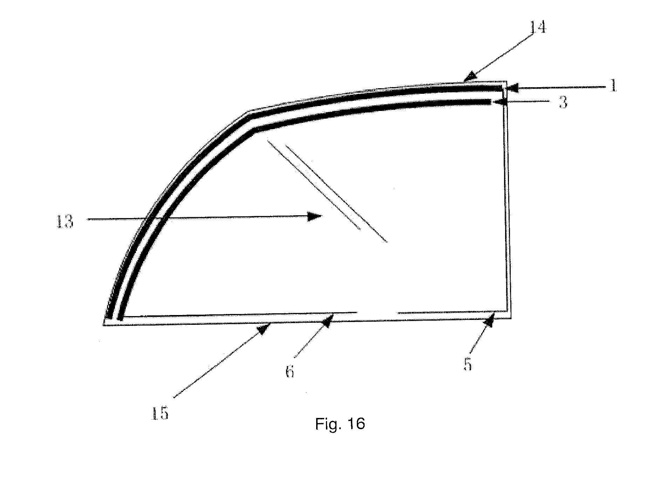

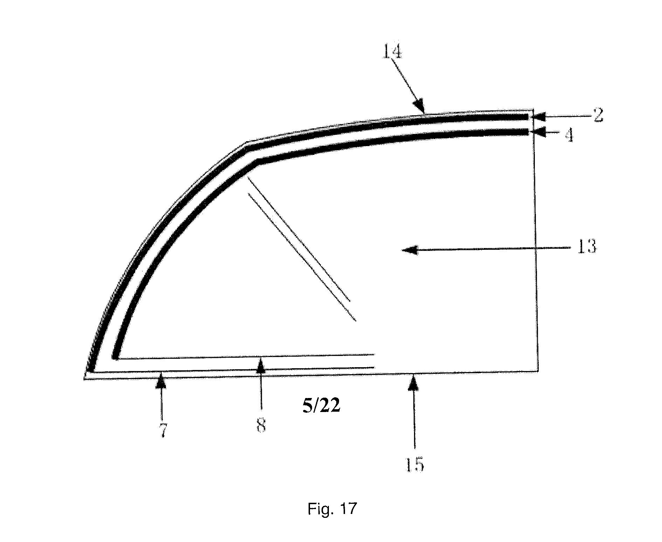

With reference to Figure 16 and Figure 17, another wiring diagram for the electrodes is shown. Among all the wires connected with the electrodes on the window glass 13, at least one wire is on one side and others are on the other side of the window glass 13. Wherein, the wire connecting with the main detector capacitor's electrode placed on the outer surface is placed on the right side and the wire connecting electrode placed on the inner surface is placed on the lower left side; the wires connecting the auxiliary detecting capacitor electrodes placed on the outer and inner surface are placed on the lower left side.. Certainly, they can also be located on the right side, as shown in Figure 14 and Figure 15.

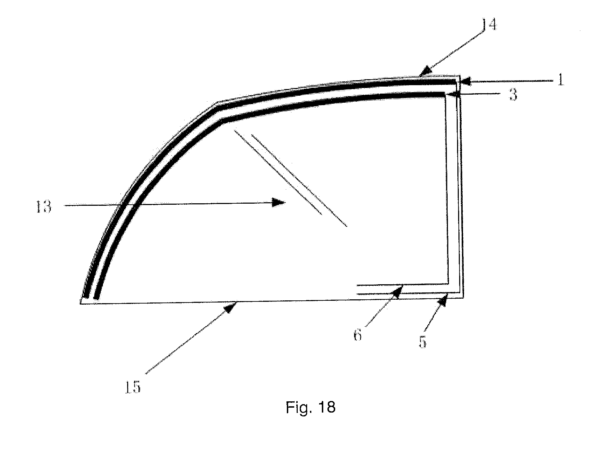

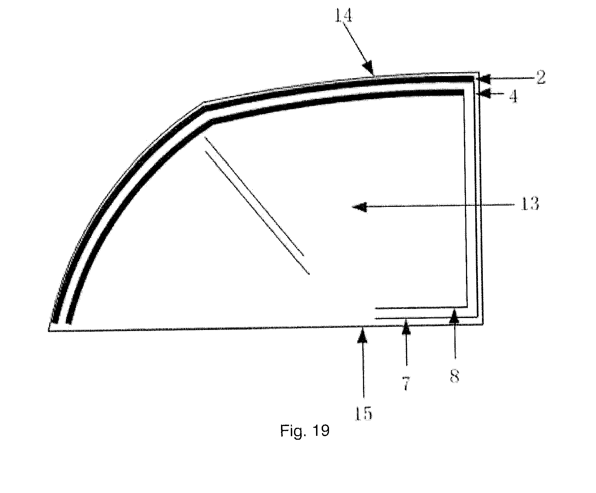

With reference to Figure 18 and Figure 19, another wiring diagram for the electrodes is shown. Namely, all the wires connected to the electrodes are led out from the same side of the window glass 13. In order to improve the signal transmission quality, shielding can be done to the wires.

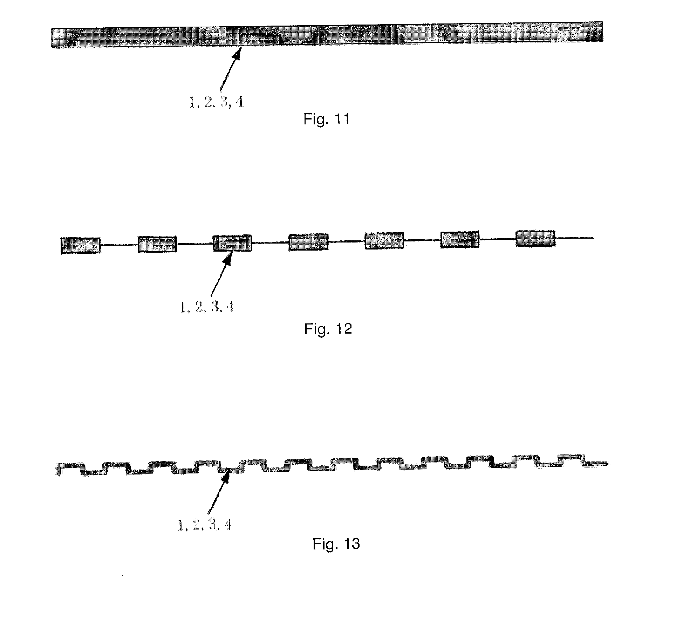

With reference to Figure 12, a different form of electrodes the present invention is shown. In this form, each electrode is constituted by several electrode plates connected in series. With reference to Figure 13, each electrode has a bend line structure, which is similar to a wall. Certainly, the lines can also be curved.

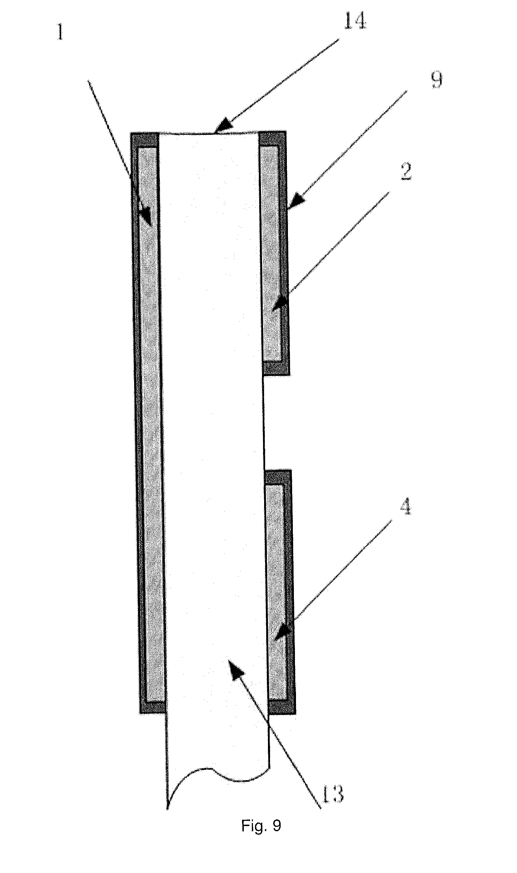

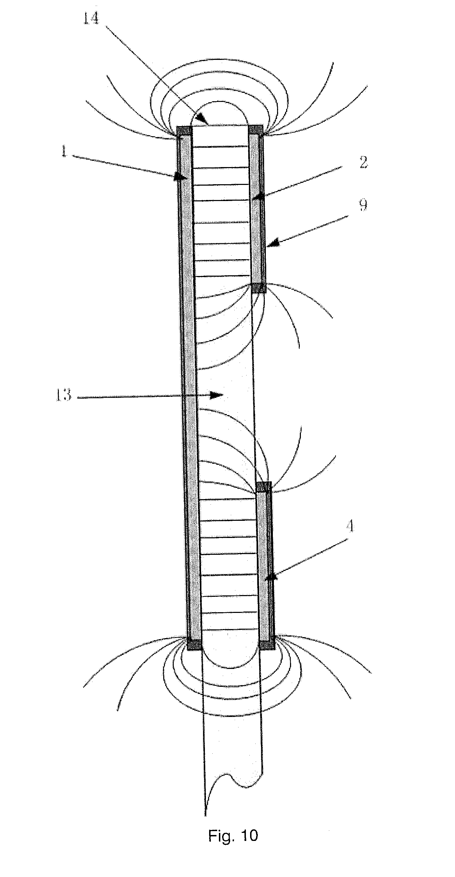

With reference to Figure 9 and Figure 10, another electrode distribution diagram of the present invention is shown. A common electrode is placed on the surface of the upper edge 14 of the window glass. Two electrodes are placed on another surface with upper and lower distributions; the upper electrode on another surface and the common electrode constitutes the main detecting capacitor, and the lower electrode on another surface and the common electrode constitute the auxiliary detecting capacitor. In this embodiment, three electrodes form two capacitors; the common electrode is connected with the excitation signal generator to input excitation signals.

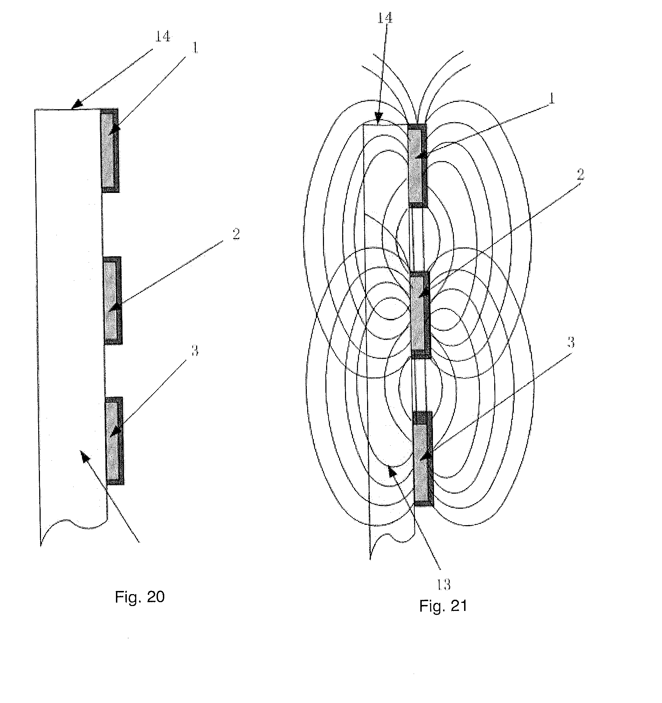

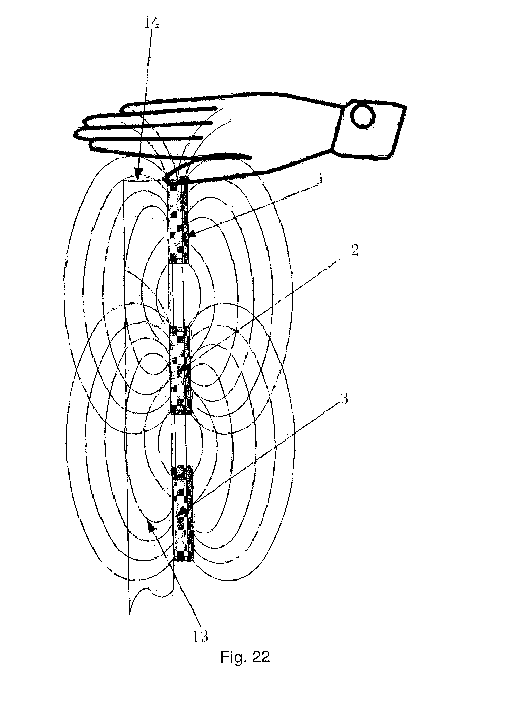

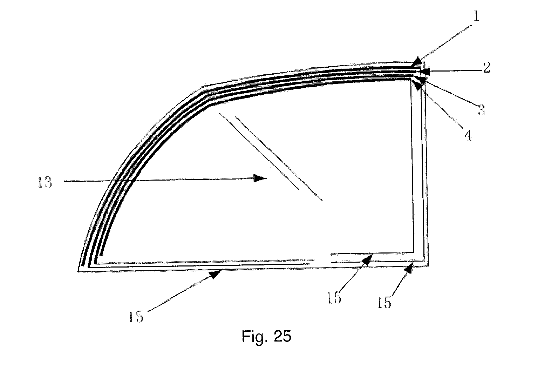

With reference to Figure 20 to Figure 24, in the fourth embodiment of the capacitor electrode distribution of the present invention, three capacitor electrode strips 1, 2, 3 are provided on the same surface of the upper edge 14 of the window glass 13 with certain spacing. Two adjacent capacitor electrodes form the main detecting capacitor C1 and the auxiliary detecting capacitor C2. Regarding the term "adjacent capacitor electrodes", in a three electrodes layout, the term refers to electrode 1 and electrode 2, electrode 2 and electrode 3, where electrode 2 is a common electrode. In a four electrodes layout, as shown in Figure 25 as the fifth embodiment, the capacitor electrodes are 1, 2, 3, 4, then electrode 1 and electrode 2, electrode 3 and electrode 4 are defined as the so-called "adjacent capacitor electrode". In layouts with other number of electrodes, the top two adjacent electrodes form the main detecting capacitor C1, and all the other lower adjacent electrodes constitute multiple pairs of auxiliary detecting capacitors C2. Therefore, the term "adjacent capacitor electrode" mainly refers to the detecting capacitor formed by the adjacent electrodes. Regarding multiple electrodes, proper electrodes can be selected based on an appropriate requirement to form corresponding detecting capacitors.

The main difference between this embodiment and the above embodiments is: all the capacitor electrodes are placed on the same surface of the window glass, which has the benefits of directly installing the capacitor electrodes on the window glass; thus makes the installation process easier and more convenient. While in use, the user only needs to connect the sensor detecting circuits with the electrode to complete installation. In this embodiment, the capacitor electrodes are installed on the inner surface of the window glass.

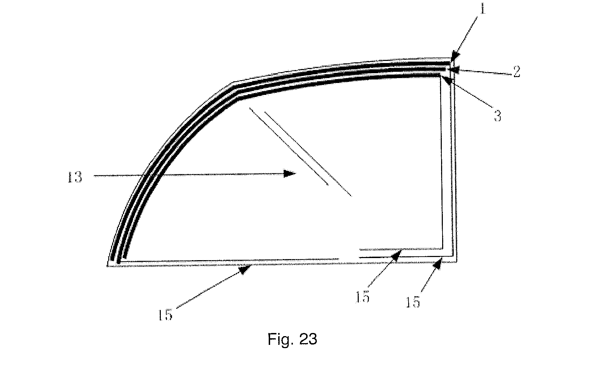

With reference to Figure 23, in this embodiment, the wire 15, which is connected with the capacitor electrodes is located on both sides of the same surface of the window glass, thus reducing mutual interference.

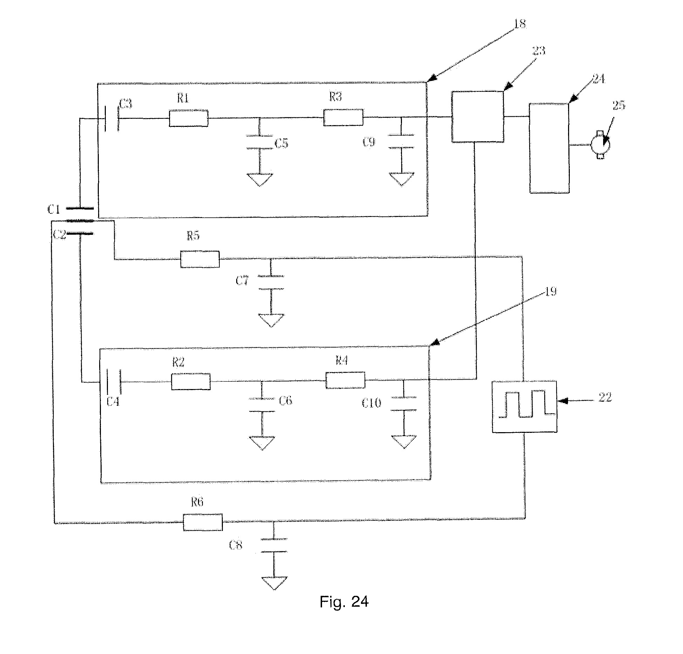

With reference to Figure 24, the circuit schematic diagram of this embodiment is designed based on three capacitor electrodes. The main difference between this circuit schematic diagram and the circuit schematic diagram shown in Figure 7 is, the excitation signal generator 22 only connects with the common electrode, and other schematics are completely the same as the schematics shown in Figure 7.

A power window anti-pinch detecting method according to the present invention, install a pair of main detecting capacitor C1 on the upper edge 14 of the window glass 13, and install at least one pair of auxiliary detecting capacitor C2 at the lower part of the main detecting capacitor C1. If a part of human body is close to the upper edge 14 of the window glass 13, the main detecting capacitor C1's capacitance change is significantly larger than the capacitance change in the auxiliary detecting capacitor C2; such comparison result is used as the judging condition to determine whether a part of human body is close to the upper edge 14 of the window glass 13. The sensor detecting circuits receives the capacitance change signals from the main detecting capacitor and the auxiliary detecting capacitor, then judges according to the judging conditions, and generates control signals. The human body approaching direction also can be determined by the judging conditions.. In the present invention, differential operation between two detecting capacitors is applied to determine whether the capacitance change is caused by human body approaching towards the upper edge of the window glass or other exterior interferences, thus, it overcomes the interference problem in existing capacitor sensors.

When a part of human body approaches towards the main detecting capacitor and the auxiliary detecting capacitor from the side of the window glass 13, since the distance between human body and the main detecting capacitor and the auxiliary detecting capacitor has minor difference, the capacitance changes of the main detecting capacitor and the auxiliary detecting capacitor are basically equal. If human body approaches to the side of the window glass 13 from the lower part of the auxiliary detecting capacitor, since the distance between human body and the auxiliary detecting capacitor is smaller than the distance between human body and the main detecting capacitor, the capacitance change of the auxiliary detecting capacitor is significantly larger than the capacitance change of the main detecting capacitor; and it is the judging condition to judge the direction of human body approaching towards the upper edge 14 of the window glass 13. By such method, the approaching direction of the human body with respect to the window glass can be determined, and judgment can be made to judge if a part of human body is on the top of the window glass. If the human body is not on the top of the window glass, it is not at the finger injury position, thus it does not affect the window glass from lifting up. Such problem cannot be solved by existing art.

The capacitance changes of the main detecting capacitor and auxiliary detecting capacitor due to temperature changes or rainwater, fog or snow water attached to the window glass 13 and other environment factors are basically the same, which act as the judgment condition to eliminate the environment change impacts. In the present invention, two detecting capacitors are provided, which simultaneously experience the environmental interference. And, since the capacitance changes are basically the same, the environment interferences can be eliminated. Environmental interference is one of the main problems of the capacitance sensors, and such problem has not been solved by existing art.

With reference to Figure 7, in the above embodiment of the present invention, a excitation signal generator 22 sends an excitation signal to the main detecting capacitor C1 and the auxiliary detecting capacitor C2; after excitation signals pass through the main detecting capacitor C1 and the auxiliary detecting capacitor C2 and experience signal changes, they are inputted into the analog filtering circuits 18, 19. After excitation signals are processed by the analog filtering circuit and transmitted to the analog-to-digital conversion circuit 23, the analog-to-digital conversion circuit 23 converts the analog signals into digital signals and transmit them to the microcontroller 24. After that, the microcontroller 24 performs differential calculations based on the digital signals to generate control signals. Its specific compositions and working principles are shown in the sensor embodiment.

**Claims**

1. A power window anti-pinch sensor, **characterized in that**, comprising at least two capacitors provided along the top surface of a window glass (13) and a sensor detecting circuit; wherein, the most top capacitor is a main detecting capacitor C1, and the lower capacitor is an auxiliary detecting capacitor C2; the main detecting capacitor C1 and auxiliary detecting capacitor C2 are sensors to detect whether human body approaches to or contacts the top of the window glass (13); the signals of capacitance change caused by human body approaching and detected by the main detecting capacitor C1 and the auxiliary detecting capacitor C2 are transmitted to the sensor detecting circuits; the sensor detecting circuits generate a control signal to control the actions of the lifting motor of the power window based on the detected change signals from the main detecting capacitor and the auxiliary detecting capacitor.

2. A power window anti-pinch sensor according to Claim 1, **characterized in that**, at least three capacitive electrode strips are provided on the same surface of the top edge of the window glass (13) in parallel with a certain spacing distance; two adjacent capacitive electrodes respectively form the main detecting capacitor C1 and auxiliary detecting capacitor C2.

3. A power window anti-pinch sensor according to Claim 1, **characterized in that**, at least two pairs of capacitive electrodes strips are set up at symmetrical positions of inner surface and outer surface above the window glass (13) according to certain spaces, among which, one pair of the capacitive electrodes located on the topmost surface constitute the main detecting capacitor C1, and other capacitive electrodes located on the lower surface constitute the auxiliary detecting capacitor C2.

4. A power window anti-pinch sensor according to Claim 1, **characterized in that**, a common electrode is provided on the surface of the top edge (14) of the window glass (13), and two electrodes are provided on another surface with an upper and lower distribution; the upper electrode on the other surface and the common electrode form the main detecting capacitor C1; the lower electrode on the other surface and the common electrode form the auxiliary detecting capacitor C2.

5. A power window anti-pinch sensor according to Claim 1, **characterized in that**, the distance from the main detecting capacitor C1 to the top edge of the window glass (13) is 0 to 5 mm, the space between the main detecting capacitor C1 and auxiliary detecting capacitor C2 is 2 to 10 mm, and the width of the electrodes is 1 to 8 mm.

6. A power window anti-pinch sensor according to Claim 1, **characterized in that**, the sensor detecting circuits include an exciting signal generator (22), at least two analog filtering circuits (18 and 19), an analog-to-digital conversion circuit (23) and a microcontroller (24); the exciting signal generator is respectively connected with one of the electrodes in the main detecting capacitor and one of the electrodes in the auxiliary detecting capacitor, the other electrode in the main detecting capacitor and the auxiliary detecting capacitor is respectively connected with the analog filtering circuits (18 and 19), the change signals detected by the main detecting capacitor and auxiliary detecting capacitor are converted into digital signals through the analog-to-digital conversion circuit (23), and the microcontroller (24) generates control signals controlling the lifting motor (25) of the power window through a software algorithm based on the received digital signals.

7. A power window anti-pinch sensor according to Claim 6, **characterized in that**, each analog filtering circuit (18 and 19) includes at least one filtering capacitor connected in series with the main detecting capacitor or with the auxiliary detecting capacitor.

8. A power window anti-pinch sensor according to Claim 6, **characterized in that**, each analog filtering circuit (18 and 19) includes at least one filtering capacitor connected in parallel with ground.

9. A power window anti-pinch sensor according to Claim 6, **characterized in that**, at least one filtering capacitor C7 is connected to ground and in parallel with the exciting signal generator and the main detecting capacitor; and at least one filtering capacitor C8 is connected to ground and in parallel with the exciting signal generator and the auxiliary detecting capacitor.

10. A power window anti-pinch sensor according to Claim 2, or Claim 3, or Claim 4, **characterized in that**, the lead wires for electrodes located on the inner surface and outer surface of the window glass (13) are located on the left and right side of window glass (13); alternatively, at least one lead wires for electrodes located on the window glass (13) is located on one side and other lead wires are located on the other side.

11. A power window anti-pinch sensor according to Claim 1, **characterized in that**, the electrodes are long enough to at least cover the area where the window glass (13) may pinch the human body.

12. A power window anti-pinch sensor according to Claim 1, **characterized in that**, the electrodes are covered with insulating layer (9).

13. A power window anti-pinch sensor according to Claim 1, **characterized in that**, each electrode is formed by connecting multiple electrode plates in series; alternatively, each electrode has a bend line structure.

14. A power window anti-pinch sensor according to Claim 1, **characterized in that**, the electrode is glued, printed, embedded or etched on the window glass (13).

15. A power window anti-pinch detection method, **characterized in that**, a pair of main detecting capacitors are provided on the top edge of the window glass (13), and at least one pair of auxiliary detecting capacitors are provided below the main detecting capacitor; if any human body approaches the top edge of the window glass (13), the capacitance change of the main detecting capacitor is significantly greater than the capacitance change of the auxiliary detecting capacitor; such result is the judging condition for judging whether the human body is close to the top edge of the window glass (13); the sensor detecting circuit receives the signals of capacitance change detected by the main detecting capacitor and the auxiliary detecting capacitor, and generates a control signal based on the condition.

16. A power window anti-pinch detection method according to Claim 15, **characterized in that**, when any human body approaches the main detecting capacitor and the auxiliary detecting capacitor from the side of the window glass (13), since the distance between the human body and the main detecting capacitor and the distance between the human body and the auxiliary detecting capacitor has little difference, the capacitance change of the main detecting capacitor and auxiliary detecting capacitor are basically equal; if any human body approaches the side of the window glass (13) from the bottom of the auxiliary detecting capacitor, since the distance between the human body and the auxiliary detecting capacitor is smaller than the distance between the human body and the main detecting capacitor, the capacitance change of the auxiliary detecting capacitor is bigger than the capacitance change of the main detecting capacitor; such results are the judging conditions for judging whether the human body is close to the top edge of the window glass (13).

17. A power window anti-pinch detection method according to Claim 15, **characterized in that**, the capacitance change of the main detecting capacitor and the auxiliary detecting capacitor caused by temperature change or environmental factors, such as rainwater, fog, snow water and electromagnetic interference on the window glass (13) is basically equal, such result is the judging condition for eliminating the effect from the environmental factors.

18. A power window anti-pinch detection method according to Claim 15, **characterized in that**, an exciting signal generator inputs an exciting signal into the main detecting capacitor and the auxiliary detecting capacitor; after experiencing the capacitance change in the main detecting capacitor and the auxiliary detecting capacitor, the exciting signal is input into the analog filtering circuit connected to the main detecting capacitor and the auxiliary detecting capacitor; each exciting signal is processed by the analog filtering circuit, then it is transmitted into the analog-to-digital conversion ; the analog-to-digital conversion circuit converts the analog signals into digital signals and transmits them into the microcontroller, which conducts a differential operation based on digital signals converted to generate a control signal.

Fig. 1

Fig. 2

Fig. 3

Fig. 4

Fig. 5

Fig. 6

Fig. 7

Fig. 8

Fig. 9

Fig. 10

1, 2, 3, 4

Fig. 11

1, 2, 3, 4

Fig. 12

1, 2, 3, 4

Fig. 13

Fig. 14

Fig. 15

Fig. 16

5/22

Fig. 17

Fig. 18

Fig. 19

Fig. 20

Fig. 21

Fig. 22

Fig. 23

Fig. 24

Fig. 25

# INTERNATIONAL SEARCH REPORT

| International application No. |
| --- |
| **PCT/CN2012/000100** |

## A. CLASSIFICATION OF SUBJECT MATTER

B60J 1/16 (2006.01) i

According to International Patent Classification (IPC) or to both national classification and IPC

## B. FIELDS SEARCHED

Minimum documentation searched (classification system followed by classification symbols)

IPC: B60J, E05F

Documentation searched other than minimum documentation to the extent that such documents are included in the fields searched

Electronic data base consulted during the international search (name of data base and, where practicable, search terms used)

CNPAT, CNKI, EPODOC, WPI: anti-pinch, vehicle?, window, sensor?, door, glass, capacity+, trap+, entrap+

## C. DOCUMENTS CONSIDERED TO BE RELEVANT

| Category* | Citation of document, with indication, where appropriate, of the relevant passages | Relevant to claim No. |
| --- | --- | --- |
| A | US 2011210755 A1 (FREESCALE SEMICONDUCTOR INC.), 01 September 2011 (01.09.2011), see the whole document | 1-18 |
| A | CN 101137814 A (MICRO-EPSILON MESSTECHNIK GMBH & CO. KG), 05 March 2008 (05.03.2008), see the whole document | 1-18 |
| A | CN 1629443 A (REFINER TECHNOLOGY CORP. et al.), 22 June 2005 (22.06.2005), see the whole document | 1-18 |
| A | JP 2005227225 A (HONDA MOTOR CO., LTD.), 25 August 2005 (25.08.2005), see the whole document | 1-18 |

☐ Further documents are listed in the continuation of Box C.    ☒ See patent family annex.

| | |
| --- | --- |
| * Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 12 August 2012 (12.08.2012) | **04 October 2012 (04.10.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Xun** Telephone No.: (86-10) **62414019** |
| --- | --- |

Form PCT/ISA/210 (second sheet) (July 2009)

## INTERNATIONAL SEARCH REPORT
Information on patent family members

| International application No. |
| --- |
| **PCT/CN2012/000100** |

| Patent Documents referred in the Report | Publication Date | Patent Family | Publication Date |
| --- | --- | --- | --- |
| US 2011210755 A1 | 01.09.2011 | JP 2011240775 A | 01.12.2011 |
| CN 101137814 A | 05.03.2008 | WO 2006066524 A1 | 29.06.2006 |
| | | DE 102005013441 A1 | 06.07.2006 |
| | | EP 1828524 A1 | 05.09.2007 |
| | | US 2008007274 A1 | 10.01.2008 |
| | | JP 2008524608 A | 10.07.2008 |
| CN 1629443 A | 22.06.2005 | None | |
| JP 2005227225 A | 25.08.2005 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6337549 B
- US 6377009 B
- US 7293467 B
- US 20030005775 A
- US 6483054 B
- US 6389752 B
- US 7319301 B
- CN 200880114004
- US 4453112 A